(19) **Europäisches Patentamt European Patent Office Office européen des brevets**

(11) **EP 1 988 063 B1**

(12) **EUROPEAN PATENT SPECIFICATION**

(45) Date of publication and mention
of the grant of the patent:
**15.09.2010 Bulletin 2010/37**

(51) Int Cl.:
**C03B 37/018** *(2006.01)*

(21) Application number: **08007338.0**

(22) Date of filing: **15.04.2008**

(54) **A method for manufacturing a preform as well as an optical fibre to be obtained therewith**

Verfahren zur Herstellung einer Vorform und damit erzeugte optische Faser

Procédé de fabrication de préforme ainsi qu'une fibre optique à obtenir avec ce procédé

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.04.2007 NL 1033773**

(43) Date of publication of application:
**05.11.2008 Bulletin 2008/45**

(73) Proprietor: **Draka Comteq B.V.**
**1083 HJ Amsterdam (NL)**

(72) Inventors:
• **Deckers, Rob Hubertus Matheus**
**5643 KB Eindhoven (NL)**
• **Korsten, Marco**
**5658 EV Eindhoven (NL)**
• **Cremers, Robert Martinus Marie**
**5553 BL Valkenswaard (NL)**
• **De Jongh, Koen**
**5694 SB Son En Breugel (NL)**

(74) Representative: **Dorna, Peter et al**
**Algemeen Octrooi- en Merkenbureau**
**P.O. Box 645**
**5600 AP Eindhoven (NL)**

(56) References cited:
**US-A- 4 741 747**

## Description

The present invention relates to a method for manufacturing a preform for optical fibres by means of a vapour deposition process, comprising the steps of:

   i) providing a hollow glass substrate tube having a supply side and a discharge side
   ii) supplying doped or undoped glass-forming gases to the interior of the substrate tube via the supply side
   iii) creating plasma conditions in the interior of the substrate tube for depositing glass layers on the inner surface of the substrate tube by moving the plasma back and forth along the longitudinal axis of the substrate tube between a reversal point near the supply side and a reversal point near the discharge side of the substrate tube
   iv) consolidating the tube obtained in step iii) into the preform.

The present invention further relates to a method for forming an optical fibre, comprising the steps of manufacturing a preform according to any one of the preceding claims 1-9 and drawing an optical fiber by heating one end of said preform.

The method referred to in the preamble is known per se from U.S. Pat. No. US 4,741,747, wherein an end taper is reduced by moving the plasma nonlinearly as a function of time in the region of at least one reversal point and/or by varying the intensity of the plasma along the length of the substrate tube as a function of time. The term "end taper" is understood to mean the deposition zones at the ends of the substrate tube, where the optical and geometric properties of the deposited layers are insufficiently constant.

From U.S. Pat. No. 5,188,648 a method for reducing the geometric end taper is known. According to said patent, this is done by interrupting the reciprocating movement of the plasma at the reversal point on the supply side of the glass-forming gases for some time.

From U.S. Pat. No. 5,145,509 there is known a method for reducing the geometric taper by placing a glass rod in the centre of the substrate tube, the radius of the glass rod being adjusted to maximally 0.67 times and minimally 0.2 times the inner radius of the glass substrate tube, and the glass rod being removed from the interior of the substrate tube upon completion of the deposition process, whereupon the hollow substrate tube is converted into the solid preform by collapsing at an elevated temperature.

From the International patent application published under number WO 2004/101458 A1 there is known a method for reducing taper wherein the velocity of the plasma in a first end region near a reversal point is varied both as a function of time in the deposition process and as a function of the position in said first end region. The term "end region" is understood to mean a region in which the velocity of the plasma is varied as a function of the position.

One of the problems of the methods according to the above-cited documents is the fact that an optimisation of the geometric taper will lead to optic taper and vice versa.

Using a vapour deposition process in which a plasma is moved back and forth between two reversal points having a fixed position relative to a substrate tube, the present inventors have found that the longitudinal refractive index profile usually exhibits a maximum value for the refractive index. The term "longitudinal refractive index profile" is understood to mean the value of the refractive index as a function of the longitudinal position in the optical preform. A maximum value for the refractive index near the supply side has in particular been found to occur when the length along which the plasma is moved nonlinearly as a function of time is optimised so as to obtain a maximum usable preform length. The term "chemical vapour deposition process" refers to, for example, the PCVD (Plasma Chemical Vapour Deposition) process.

It is an object of the present invention to provide a method for manufacturing a preform for optical fibres by means of a vapour deposition process, wherein both the optic taper and the geometric taper are minimised.

Another object of the present invention is to provide a method for manufacturing a preform for optical fibres by means of a vapour deposition process wherein a maximum preform length can be used for forming the optical fibre.

Yet another object of the present invention is to provide a method for manufacturing a preform for optical fibres by means of a vapour deposition process wherein the stress that is set up in the deposited glass layers as a result of the deposition is reduced.

The method as referred to in the introduction is characterised in that the position of the reversal point near the supply side of the substrate tube shifts along the longitudinal axis of the substrate tube during at least part of step iii).

One or more of the above objects are accomplished by using the method according to the present invention.

The present inventors have surprisingly found that the aforesaid maximum value for the refractive index near the supply side of the substrate tube can be reduced by shifting the position of the reversal point near the supply side of the substrate tube along the longitudinal axis of the substrate tube during at least part of step iii). Within this context they have furthermore found that the effect on the geometric taper is negligible and that it has therefore become possible to increase the usable preform length.

Although the taper effect is less pronounced on the discharge side of the substrate tube than on the supply side of the substrate tube, it is also possible to shift the position of the reversal point near the discharge side during at least part of step iii). The stress that is built into the deposited layers during the vapour deposition process is reduced in this manner.

In a special embodiment, the position of the reversal point near the supply side shifts in the direction away from the discharge side. Such a shift makes it possible to increase the usable preform length.

In another embodiment, the position of the reversal point near the supply side may also shift in the direction of the discharge side. In both of the above cases the amount of stress that is built to the glass as a result of the deposition is reduced. A reduced amount of stress in the glass prevents layer jumping. Layer jumping occurs when the built-in stress of the deposited layers is so high that the layers, which have been deposited one after the other in time, become detached from each other. A preform which exhibits layer jumping cannot be used, or only in part, for forming optical fibres therefrom.

Preferably, the shift of the position of the reversal point near the supply side amounts to maximally half the length of the plasma. The term "length of the plasma" is to be understood the length parallel to the longitudinal axis of the substrate tube. The present inventors have found that when the shift of the reversal point near the supply side amounts to more than half the length of the plasma, the usable preform length will decrease. This decrease in the usable preform length is attributed either to the development of a geometric taper or to the development of an optic taper caused by an overly strong change in the refractive index, or a combination thereof. The term "geometric taper" is understood to mean a taper in relation to the geometric properties of an optical preform. It has been found that when the shift of the position of the reversal point near the supply side is greater than maximally half the length of the plasma, the usable preform length is smaller than in the situation in which the position of the reversal point near the supply side is stationary during the entire deposition process.

Other special embodiments are defined in the dependent claims.

If desired, the preform obtained by means of the present invention may be externally provided with one or more additional glass layers, for example by placing the preform in a tube made of quartz glass or by applying silica by means of an external deposition process, or by a combination of the two. The preform, which may or may not be externally provided with one or more additional glass layers, may be heated at one end thereof, after which an optical fibre can be drawn therefrom.

The present invention will be explained in more detail hereinafter with reference to a number of figures, in which connection it should be noted, however, that the present invention is by no means limited to such special embodiment is.

Figure 1 is a schematic representation of a substrate tube in which the present invention is implemented.

Figure 2 shows a velocity profile of the plasma when the method according to the invention is used.

Figure 3 shows a longitudinal refractive index profile of two preforms.

Figure 4 shows the radial refractive index profile of a simple step-index optical fibre.

Figure 5 shows the radial refractive index profile of a W-type step-index optical fibre.

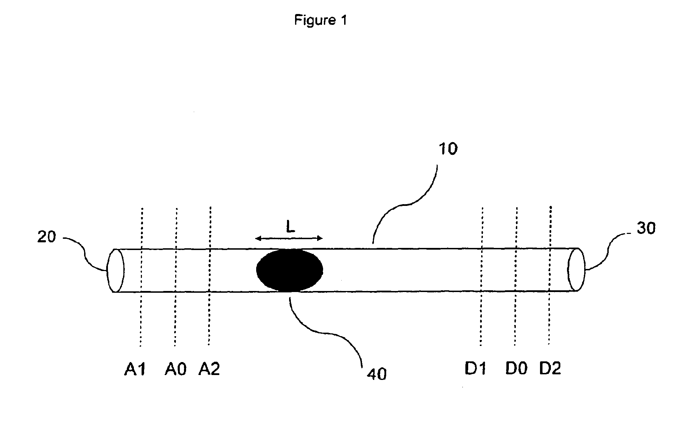

In figure 1, a hollow substrate tube 10 in which the internal vapour deposition process according to the present invention can be carried out is schematically shown. In the substrate tube 10, which has a supply side 20 and a discharge side 30, a plasma 14 having a length L is moved back and forth between two reversal points (A0, A1, A2 and DO, D1, D2, respectively). The length L is to be regarded as the length along which the plasma 40 extends along the longitudinal axis of the substrate tube 10.

The position of the reversal point near the supply side 20 is indicated A0, A1 and A2, respectively. The position of the reversal point near the supply side 20 is indicated D0, D1 and D2, respectively. Plasma 40 is generated by a resonator (not shown) which surrounds the substrate tube 10. The resonator is connected to microwave-generating means (not shown) and couples microwaves into the substrate tube 10 so as to generate plasma conditions in the interior of the substrate tube 10. In a special embodiment, the substrate tube 10 and the resonator are surrounded by a furnace (not shown).

Position A0 corresponds to the position of the reversal point near the supply side 20 at the beginning of step iii).

Position D0 corresponds to the position of the reversal point near the discharge side 30 at the beginning of step iii).

The position of the reversal point A0 near the supply side 20 shifts along the longitudinal axis of the substrate tube 10 during at least part of step iii). The position of the reversal point A0 near the supply side 20 can shift towards A1 (away from the discharge side) or towards A2 (in the direction of the discharge side). In a preferred embodiment, the position of the reversal point A0 near the supply side 20 thus shifts in the direction away from the discharge side 30 of the substrate tube 10, that is, in the direction of A1. When the position of the reversal point A0 is shifted in the direction away from the discharge side 30 of the substrate tube 10, viz. in the direction of A1, the effect on the geometric taper will be less than in the situation in which the position of the reversal point A0 near the supply side 20 is shifted in the direction of the discharge side 30 of the substrate tube 10.

The maximum longitudinal shift of the reversal point near the supply side 20 preferably amounts to half the length L of the plasma 40.

In view of the fact that the deposition process may last for a period in the order of a few hours, whilst the time of travel of the plasma 40 from the reversal point near the supply side to the reversal point near the discharge side and back to the reversal point near the supply side again is in the order of a few seconds, for example 10 seconds, a relatively large number of discrete positions will be taken up between position A0 and D0 and between A1 or A2 and D1 or D2, respectively.

The position of the reversal point may be shifted linearly as a function of time, for example. Preferably, the shifting of the reversal point near the supply side takes place during the entire step iii), in particular in view of the stress that is built into the deposited glass layers during said step. For the same reason it is preferable if the shifting of the reversal point near the discharge side takes place during the entire step iii).

The shifting of the reversal point near the supply side 20 of the substrate tube 10 during at least part of step iii) does not necessarily take place in one and the same direction. This means that a particular position of the reversal point near the supply side 20 can be taken up more than once during at least part of step iii). It is possible, therefore, for the position of the reversal point near the supply side 20 at the beginning of step iii) to be the same as the position of the reversal point near the supply side 20 at the end of step iii), whilst viewed over the entire vapour deposition process, or step iii), a shift of the reversal point near the supply side 20 has indeed taken place, both in the direction of the discharge side and in the direction away from the discharge side, during at least part of step iii).

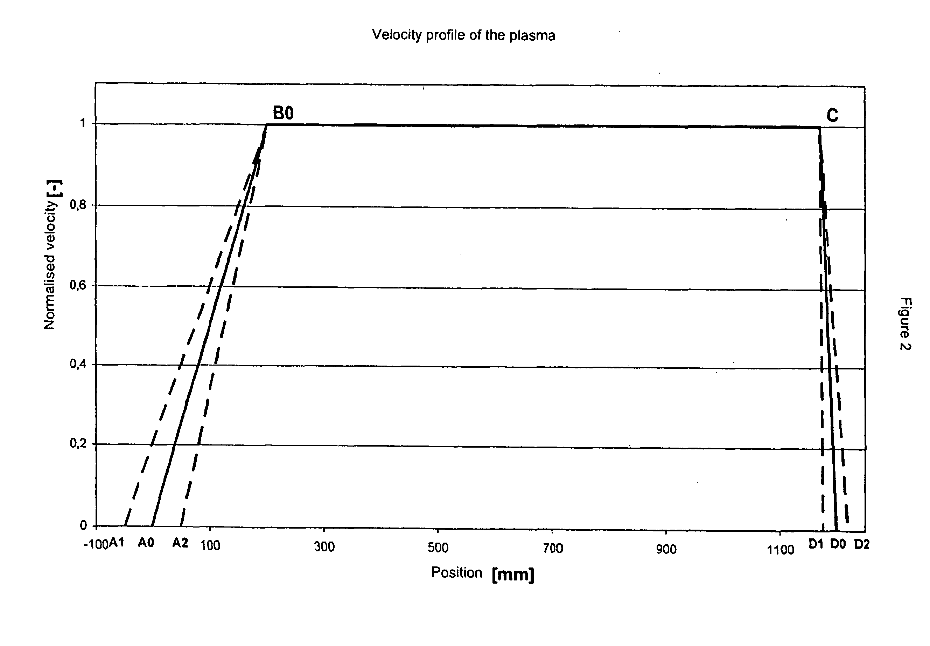

Figure 2 shows the velocity profile of the plasma 40 during step iii) of the present method. The position of the plasma 40 (see figure 1) relative to the longitudinal axis of the substrate tube 10 (see figure 1) is plotted on the horizontal axis. The normalised velocity at which the plasma 40 travels along the longitudinal axis of the substrate tube 10 is plotted on the vertical axis. The term "normalised velocity" is understood to mean the velocity in relation to the velocity in the region B0 - C, which velocity is regarded as a constant velocity for the sake of clarity. When the plasma 40 travels from the reversal point near the supply side 20 (see figure 1) in the direction of the reversal point near the discharge side 30 (see figure 1), the velocity of the plasma 40 increases to a normalised value equalling 1 in the region between positions A0 and B0 or A1 or A2 and B0. Although this is not necessary, the plasma 40 travels at a substantially constant velocity between positions B0 and C. The velocity of the plasma 40 decreases to a value of zero in the region between positions C and D0 or C and D1 or D2. Once the plasma 40 travels from the reversal point near the discharge side 30 towards the reversal point near the supply side 20, a velocity increase takes place in the region between the positions D0 and C or D1 or D2 and C, and a velocity decrease takes place in the region between the positions B0 and A0 or B0 and A1 or A2. According to figure 2, the plasma 40 is assumed to travel at a constant velocity in the region B0-C

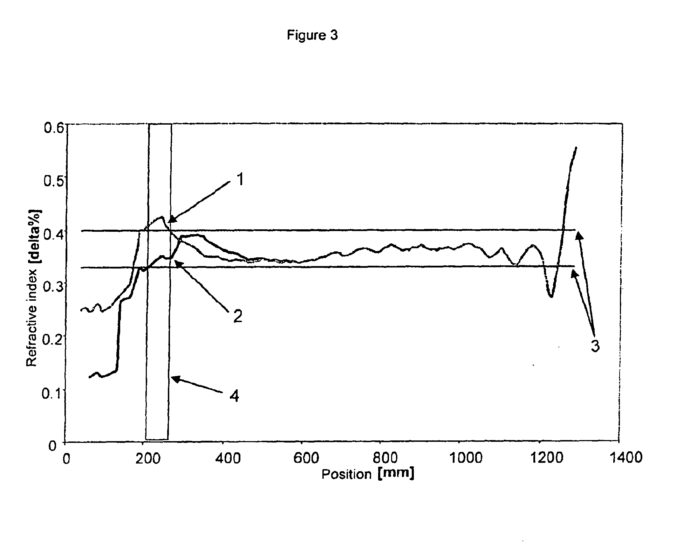

Figure 3 shows a longitudinal refractive index profile of a consolidated preform manufactured by means of a standard process (1) and of a consolidated preform manufactured by means of the method according to the present invention (2). Plotted on the horizontal axis is the longitudinal position in, or the length of, the preform. Both preforms have a length of about 1200 mm. Position 0 corresponds to the supply side 20 and position 1400 corresponds to the discharge side 30 of the substrate tube 10. Tolerance limits 3 indicate the minimum and maximum values of the refractive index as determined by the applicant. In case of a refractive index value outside these tolerance limits, the fibre that is made from the preform will exhibit optical defects.

In figure 3 the tolerance limits are 0.33 and 0.4 delta%, respectively, but these values must not be interpreted as being limitative.

The value delta% is calculated according to the formula below:

$$delta\_i\% \equiv \frac{n_i^2 - n_c^2}{2n_i^2}$$

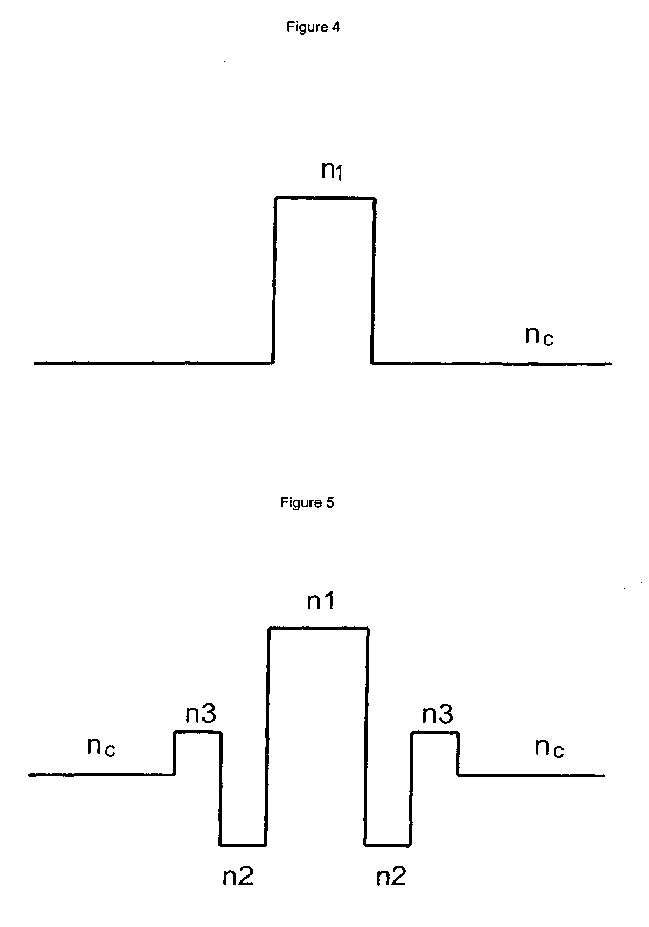

In the formula, $n_i$ is the refractive index value at a radial position i and $n_c$ is the refractive index value at a radial reference position c in the consolidated preform. The value $n_c$, for example, equals the refractive index value of the layer that surrounds the core, which layer is also referred to as "cladding". On the basis of a radial refractive index profile for optical fibres as shown in figure 4, for example, delta_1 % can be calculated by using the value of $n_1$ for $n_i$.

The longitudinal refractive index profile 1 shows a maximum value for the refractive index in the region indicated at 4 around position 200 which falls outside the aforesaid tolerance limits 3. Consequently, this part of the preform 1 will not be suitable for forming an optical fibre therefrom.

The longitudinal refractive index profile 2 also shows a maximum value for the refractive index near the supply side, but this value falls within the tolerance limits 3. As a result, the usable preform length for a preform having refractive index profile 2 has increased by about 50 mm in comparison with the usable preform length of the preform manufactured according to the prior art, viz. a preform having refractive index profile 1. This corresponds to an increase of about 5% in the preform length, or, expressed in fibre length, 30 km or more in the embodiment of a simple, single-mode optical fibre (see figure 4).

In addition to the above improvement as regards the usable preform length, less stress is built into the glass deposited in step iii) in preform 2 than in preform 1.

The method according to the present invention is in particular suitable for manufacturing preforms for optical fibres of the so-called step-index type. This term is used for fibres having a radial refractive index profile, in which at least one shell of deposited layers is present, in which context the term "shell" is to be regarded as a number of layers having a constant refractive index value in radial direction. Examples of such profiles are shown in figures 4 and 5.

Figure 4 shows a simple step-index profile consisting of a core having refractive index $n_1$ and a cladding having refractive index $n_c$. Figure 5 shows a W-type profile having a core consisting of shells having refractive indices $n_1$, $n_2$ and $n_3$ and a cladding having refractive index $n_c$.

In an embodiment comprising more than one shell having a constant refractive index in radial direction, as in the aforesaid W-type profile, for example, it is possible to determine the optimum shift of the position of reversal points for each shell during the deposition in step iii) of the present method.

The present method is thus to be regarded as a number of substeps iii), each sub-step comprising the deposition of a shell. In particular, three shells can thus be distinguished in figure 5, viz. the shells having refractive indices $n_1$, $n_2$ and $n_3$, wherein each shell is formed in a sub-step and wherein the optimum shift of the position of the reversal points must be determined for each shell in order to obtain a constant refractive index value along the length of the preform for the shell in question.

Example

Preforms for forming optical fibres having a radial refractive index profile as shown in figure 4 are manufactured by means of the method according to the present invention. The reversal point near the supply side shifts in the direction away from the discharge side during the entire step iii). In figures 1 and 2 this means that the reversal point near the supply side shifts from A0 to A1 during step iii). The plasma length L is about 20 cm and the shift takes place linearly with time. The total shift is varied, and the effect thereof on the usable preform length is determined.

Table

| Example | Total shift [mm] | Usable preform length [mm] |
|---------|------------------|----------------------------|
| No shift | 0 | 1000 |
| I | 20 | 1010 |
| II | 50 | 1030 |
| III | 70 | 1050 |
| IV | 100 | 1050 |
| V | 110 | 980 |

Preforms of a batch of preforms manufactured according to the present invention exhibit a reduction of about 5% in the preforms that exhibit layer jumping.

**Claims**

1. A method for manufacturing a preform for optical fibres by means of a vapour deposition process, comprising the steps of:

    i) providing a hollow glass substrate tube (10) having a supply side (20) and a discharge side (30)
    ii) supplying doped or undoped glass-forming gases to the interior of the substrate tube (10) via the supply side (20)
    iii) creating plasma conditions in the interior of the substrate tube (10) for depositing glass layers on the inner surface of the substrate tube (10) by moving the plasma back and forth along the longitudinal axis of the substrate tube (10) between a reversal point near the supply side (20) and a reversal point near the discharge side (30) of the substrate tube (10)
    iv) consolidating the tube (10) obtained in step iii) into the preform, **characterised in that** the position of the reversal point near the supply side (20) of the substrate tube (10) shifts along the longitudinal axis of the substrate tube (10) during at least part of step iii).

2. A method according to claim 1, **characterised in that** the position of the reversal point near the supply side (20) shifts along the longitudinal axis of the substrate tube (10) in the direction away from the discharge side (30).

3. A method according to either one of the preceding claims 1-2, **characterised in that** the shift of the position of the reversal point near the supply side (20) along the longitudinal axis of the substrate tube (10) amounts to maximally half the length of the plasma.

4. A method according to any one of the preceding claims 1-3, **characterised in that** the position of the reversal point near the discharge side (30) shifts along the longitudinal axis of the substrate tube (10) during at least part of step iii).

5. A method according to claim 4, **characterised in that** the position of the reversal point near the discharge side (30) shifts along the longitudinal axis of the substrate tube (10) in the direction of the supply side (20).

6. A method according to any one of the preceding claims 1-5, **characterised in that** the shift of the position of the reversal point near the supply side (20) takes place during the entire step iii).

7. A method according to either one of the preceding claims 4-5, **characterised in that** the shift of the position of the reversal point near the discharge side (30) takes place during the entire step iii).

8. A method according to any one of the preceding claims, **characterised in that** the position of the reversal point near the supply side (20) of the hollow substrate tube (10) shifts along the longitudinal axis of the substrate tube (10) so as to obtain a refractive index value in the glass layers thus deposited on the interior of the hollow substrate tube (10) which is substantially constant in the longitudinal direction of the substrate tube (10), which glass layers are to be regarded as a shell, wherein one or more additional shells, each comprising a number of glass layers, are deposited on the shell thus obtained, wherein the position of the reversal point near the supply side (20) of the substrate tube (10) is selected for the deposition of each shell so that the refractive index value across the shell in question in the longitudinal direction of the substrate tube (10) is substantially constant.

9. A method according to any one of the preceding claims, **characterised in that** the shift of the position of the reversal point along the longitudinal axis of the substrate tube (10) near the supply side (20) and/or near the discharge side (30) is carried out linearly as a function of time during at least part of step iii).

10. A method for forming an optical fibre, comprising the steps of manufacturing a preform according to any one of the preceding claims 1-9 and drawing an optical fibre by heating one end of said preform.

**Patentansprüche**

1. Verfahren zur Herstellung einer Vorform für optische Fasern mittels eines Aufdampfverfahrens, umfassend die Schritte:

   i) Bereitstellen eines hohlen Glassubstratrohrs (10), welches eine Zuführungsseite (20) und eine Ableitungsseite (30) aufweist,
   ii) Zuführen eines dotierten oder undotierten Glas bildenden Gases in das Innere des Substratrohrs (10) über die Zuführungsseite (20),
   iii) Erzeugen von Plasmabedingungen in dem Inneren des Substratrohrs (10) zum Auftragen von Glasschichten auf der Innenfläche des Substratrohrs (10), indem das Plasma entlang der Längsachse des Substratrohrs (10) zwischen einem Umkehrpunkt nahe der Zuführungsseite (20) und einem Umkehrpunkt nahe der Ableitungsseite (30) des Substratrohrs (10) bewegt wird,
   iv) Verfestigen des Rohrs (10), welches im Schritt iii) gewonnen wurde, zu der Vorform,

   **dadurch gekennzeichnet, dass** sich die Position des Umkehrpunkts nahe der Zuführungsseite (20) des Substratrohrs (10) entlang der Längsachse des Substratrohrs (10) während zumindest eines Teils des Schritts iii) verschiebt.

2. Verfahren nach Anspruch 1, **dadurch gekennzeichnet, dass** sich die Position des Umkehrpunkts nahe der Zuführungsseite (20) entlang der Längsachse des Substratrohrs (10) in der Richtung weg von der Ableitungsseite (30) verschiebt.

**3.** Verfahren nach einem der vorhergehenden Ansprüche 1-2, **dadurch gekennzeichnet, dass** das Verschieben der Position des Umkehrpunkts nahe der Zuführungsseite (20) entlang der Längsachse des Substratrohrs (10) maximal eine Hälfte der Länge des Plasmas beträgt.

**4.** Verfahren nach einem der vorhergehenden Ansprüche 1-3, **dadurch gekennzeichnet, dass** sich die Position des Umkehrpunkts nahe der Ableitungsseite (30) entlang der Längsachse des Substratrohrs (10) während zumindest eines Teils des Schritts iii) verschiebt.

**5.** Verfahren nach Anspruch 4, **dadurch gekennzeichnet, dass** sich die Position des Umkehrpunkts nahe der Ableitungsseite (30) entlang der Längsachse des Substratrohrs (10) in Richtung der Zuführungsseite (20) verschiebt.

**6.** Verfahren nach einem der vorhergehenden Ansprüche 1-5, **dadurch gekennzeichnet, dass** die Verschiebung der Position des Umkehrpunkts nahe der Zuführungsseite (20) während des gesamten Schritts iii) stattfindet.

**7.** Verfahren nach einem der vorhergehenden Ansprüche 4-5, **dadurch gekennzeichnet, dass** das Verschieben der Position des Umkehrpunkts nahe der Ableitungsseite (30) während des gesamten Schritts (iii) stattfindet.

**8.** Verfahren nach einem der vorhergehenden Ansprüche, **dadurch gekennzeichnet, dass** sich die Position des Umkehrpunkts nahe der Zuführungsseite (20) des hohlen Substratrohrs (10) entlang der Längsachse des Substratrohrs (10) verschiebt, um einen Brechungsindexwert in den Glasschichten, welche somit auf dem Inneren des hohlen Substratrohrs (10) abgelagert werden, zu erzielen, welcher im Wesentlichen in der Längsrichtung des Substratrohrs (10) konstant ist, wobei Glasschichten als eine Hülse zu betrachten sind, wobei eine oder mehrere zusätzliche Hülsen, welche jeweils eine Anzahl von Glasschichten umfassen, auf die somit erzielte Hülse aufgetragen werden, wobei die Position des Umkehrpunkts nahe der Zuführungsseite (20) des Substratrohrs (10) für das Auftragen einer jeden Hülse derart ausgewählt wird, dass der Brechungsindexwert über die besagte Hülse in der Längsrichtung des Substratrohrs (10) im Wesentlichen konstant ist.

**9.** Verfahren nach einem der vorhergehenden Ansprüche, **dadurch gekennzeichnet, dass** das Verschieben der Position des Umkehrpunkts entlang der Längsachse des Substratrohrs (10) nahe der Zuführungsseite (20) und/oder nahe der Ableitungsseite (30) linear als eine Funktion der Zeit während zumindest eines Teils des Schritts iii) ausgeführt wird.

**10.** Verfahren zum Ausbilden einer optischen Faser, umfassend die Schritte eines Herstellens einer Vorform nach einem der vorhergehenden Ansprüche 1-9 und ein Ziehen einer optischen Faser durch Erhitzen von einem Ende der Vorform.


**Revendications**

**1.** Procédé de fabrication d'une préforme pour fibres optiques au moyen d'un traitement de dépôt en phase vapeur, comprenant les étapes consistant à :

i) utiliser un tube de substrat de verre creux (10) ayant un côté d'alimentation (20) et un côté de sortie (30),
ii) introduire des gaz de formation de verre dopés ou non dopés à l'intérieur du tube de substrat (10) par l'intermédiaire du côté d'alimentation (20),
iii) créer des conditions de plasma à l'intérieur du tube de substrat (10) pour déposer des couches de verre sur la surface intérieure du tube de substrat (10) en déplaçant le plasma d'avant en arrière le long de l'axe longitudinal du tube de substrat (10) entre un point d'inversion proche du côté d'alimentation (20) et un point d'inversion proche du côté de sortie (30) du tube de substrat (10),
iv) consolider le tube (10) obtenu à l'étape iii) en la préforme,

**caractérisé en ce que** la position du point d'inversion proche du côté d'alimentation (20) du tube de substrat (10) se décale le long de l'axe longitudinal du tube de substrat (10) pendant au moins une partie de l'étape iii).

**2.** Procédé selon la revendication 1, **caractérisé en ce que** la position du point d'inversion proche du côté d'alimentation (20) se décale le long de l'axe longitudinal du tube de substrat (10) dans une direction l'éloignant du côté de sortie (30).

**3.** Procédé selon l'une quelconque des revendications 1 à 2 précédentes, **caractérisé en ce que** le décalage de la position du point d'inversion proche du côté d'alimentation (20) le long de l'axe longitudinal du tube de substrat (10) s'élève au maximum à la moitié de la longueur du plasma.

**4.** Procédé selon l'une quelconque des revendications 1 à 3, **caractérisé en ce que** la position du point d'inversion proche du côté de sortie (30) se décale le long de l'axe longitudinal du tube de substrat (10) pendant au moins une partie de l'étape iii).

**5.** Procédé selon la revendication 4, **caractérisé en ce que** la position du point d'inversion proche du côté de sortie (30) se décale le long de l'axe longitudinal du tube de substrat (10) dans la direction du côté d'alimentation (20).

**6.** Procédé selon l'une quelconque des revendications 1 à 5 précédentes, **caractérisé en ce que** le décalage de la position du point d'inversion proche du côté d'alimentation (20) se produit pendant toute la durée de l'étape iii).

**7.** Procédé selon l'une quelconque des revendications 4 et 5 précédentes, **caractérisé en ce que** le décalage de la position du point d'inversion proche du côté de sortie (30) s'effectue pendant toute la durée de l'étape iii).

**8.** Procédé selon l'une quelconque des revendications précédentes, **caractérisé en ce que** la position du point d'inversion proche du côté d'alimentation (20) du tube de substrat creux (10) se décale le long de l'axe longitudinal du tube de substrat (10) de façon à obtenir une valeur de l'indice de réfraction, dans les couches de verre ainsi déposées sur l'intérieur du tube de substrat creux (10), qui soit sensiblement constante dans la direction longitudinale du tube de substrat (10), lesquelles couches de verre doivent être considérées comme une enveloppe, dans lequel une ou plusieurs enveloppes supplémentaires, comprenant chacune un certain nombre de couches de verre, sont déposées sur l'enveloppe ainsi obtenue, dans lequel la position du point d'inversion proche du côté d'alimentation (20) du tube de substrat (10) est sélectionnée pour le dépôt de chaque enveloppe afin que la valeur de l'indice de réfraction dans l'ensemble de l'enveloppe en question, dans la direction longitudinale du tube de substrat (10), soit sensiblement constante.

**9.** Procédé selon l'une quelconque des revendications précédentes, **caractérisé en ce que** le décalage de la position du point d'inversion le long de l'axe longitudinal du tube de substrat (10) proche du côté d'alimentation (20) et/ou proche du côté de sortie (30) est effectué linéairement en fonction du temps pendant au moins une partie de l'étape iii).

**10.** Procédé de formation d'une fibre optique, comprenant les étapes consistant à fabriquer une préforme selon l'une quelconque des revendications 1 à 9 précédentes et à étirer une fibre optique par chauffage d'une extrémité de ladite préforme.

Figure 1

Velocity profile of the plasma

Figure 2

EP 1 988 063 B1

10

Figure 3

Figure 4

$n_1$

$n_c$

Figure 5

n1

n3

$n_c$

n3

$n_c$

n2

n2

**EP 1 988 063 B1**

**REFERENCES CITED IN THE DESCRIPTION**

**Patent documents cited in the description**

- US 4741747 A
- US 5188648 A
- US 5145509 A
- WO 2004101458 A1